# EUROPEAN PATENT SPECIFICATION

(11) **EP 4 140 961 B1**
(45) Date of publication and mention of the grant of the patent: **15.11.2023**
(21) Application number: 21193894.9
(22) Date of filing: 31.08.2021
(51) Int. Cl.: C03B 19/09

(54) **PREPARATION METHOD FOR MARBLE PATTERNED GLASS BODY**
HERSTELLUNGSVERFAHREN FÜR EINEN MARMORIERTEN GLASKÖRPER
PROCÉDÉ DE PRÉPARATION D'UN ARTICLE EN VERRE À MOTIFS MARBRÉS

(43) Date of publication of application: 01.03.2023
(73) Proprietor: Foshan Pamase Building Material Co., Ltd., Foshan, Guangdong 528300 (CN)
(72) Inventor: LIANG, Tian, Foshan (CN)
(74) Representative: Sun, Yiming

(56) References cited:
- JP-A- 2012 087 029
- US-A1- 2020 139 750

## Description

### FIELD OF THE INVENTION

The present invention relates to a preparation method of a decorative material, in particular of a full-body marble-patterned glass mosaic.

### BACKGROUND OF THE INVENTION

Glass mosaics are also known as glass mosaic tiles. It is a small, colored surface decorative glass. Made from natural minerals and cullet, glass mosaics are among the safest construction materials and are exceptionally environmentally. They are acid- and alkali-resistant, corrosion-resistant, and their colors do not fade. Thus, glass mosaics are very suitable construction materials for bathroom walls and floors. Glass mosaics generally appear colorless and transparent, colored and transparent, or translucent. For glass mosaics to have a variety of different colors and to increase the diversity of glass mosaics, in existing techniques, a low-temperature glaze is sprayed onto the surface of a green body of mosaic glass, followed by low-temperature firing. To produce a marble-like pattern on the glass mosaic, in existing techniques, the surface of the green body of the mosaic glass is subjected to inject printing, then covered with a low-temperature glaze.

Chinese patent publication No. CN107827355A has disclosed a process for preparing a green body of mosaic glass, comprising the following steps: (1) mixing 80-95 mass% of raw cullet and 5-20 mass% of waste cullet to obtain a mixture. (2) Adding water to the mixture obtained in step (1) and ball-milling to obtain a slurry; granulating and sieving to obtain a mixed green body powder. (3) Transforming the mixed green body powder into a mold, performing press forming; after firing at a low temperature, the green body of the mosaic glass is obtained. The method also includes spraying a low-temperature glaze on the surface of the green body of mosaic glass and then firing at a low temperature. Inkjet printing is performed on the surface of the mosaic glass body covered with the low-temperature glaze to form a pattern.

The methods described above merely involve printing different patterns on the surface of a glass green body, followed by firing at a high temperature. The patterns obtained appear to float on the surface of the glass mosaic and do not appear three-dimensioned. In addition, these patterns do not faithfully resemble natural stones, and may easily fade with use.

Chinese patent publication No. CN109553297A and US2020/139750 filed by the applicant discloses a full-body marbled-patterned mosaic. A mold is used to distribute materials, which is not efficient and gives an undesirable, repetitive pattern. In addition, the additives used in the production of the mosaic are binder, a whitening agent, and an anti-settling agent; a low-temperature flux is also involved. The texture of the mosaic produced is not ideal: although the pattern is distributed in multiple layers, the transition section between the mosaic body and the pattern still does not appear natural enough. The mosaic does not have an ideal glassy texture. Furthermore, the full-body marbled-patterned mosaic of the prior art has less than ideal corrosion resistance and stain resistance. After a long period of outdoor use, the mosaic is susceptible to rain erosion and weathering. As a result, dirt is contained in the mosaic, affecting the appearance of the mosaic.

JP 2012 087029 A provides a glass frit which has a low melting temperature and high transparency. The glass frit can be mixed with a pigment and melted to obtain a decorative glass product.

### SUMMARY OF THE INVENTION

The objective of the present invention is to provide a method for making a full-body marbled glass mosaic with outstanding properties, a glassy texture and a strong layering pattern, which vividly simulates the pattern and texture of natural marble.

Another objective of the present invention is to provide a method for preparing a full-body marble-patterned glass mosaic, the method is simple and efficient. The invention is set out in the appended set of claims.

The present invention has the following beneficial effects:
In the present invention, the cullet is mixed with the additive before spray granulation. This increases the fluidity of powder particles and increases particle size uniformity. Then, the base body powder obtained by spray granulation is mixed with the colorant mixture and distributed into multiple layers by the distributor. The colorant mixture is obtained by mixing the high-temperature colorant and the low-temperature flux. This process greatly improves the quality of the pattern of the product.

The glass powder as the low-temperature flux has a matching expansion coefficient with the other materials, reduces the peak exothermic temperature of the reaction, and controls the linear expansion coefficient and shrinkage of the reactants, thereby eliminating internal stress and preventing cracking in the final product. Moreover, the glass powder as the low-temperature flux ensures that the surface has excellent corrosion resistance, stain resistance, and good weathering resistance. Consequently, the formation of white particles on the surface of the mosaic as a result of long-time exposure to air/humidity can be prevented, foggy white spots or iridescence on the surface of the glass mosaic can be prevented.

The glass powder as the low-temperature flux increases transparency. Good transparency can still be achieved when the amount of the low-temperature flux is 95 wt% -100 wt% of the cullet. The full-body marble-patterned glass mosaic thus has a glassy texture. This, together with the process of distributing materials into multiple layers via the distributor, each layer comprising the first colorant and the second colorant, give rise to a pattern with a strong layering texture. The final product is able to vividly simulate the pattern and texture of natural marble.

Through the combination of different meshes of the glass powder and the cullet, delamination can be prevented during use. After material distribution, a natural marble pattern is formed, which contributes to the glassy texture of the final product. In addition, the glass powder increases the tensile strength, compressive strength, and wear resistance of the product.

### BRIEF DESCRIPTION OF THE DRAWING

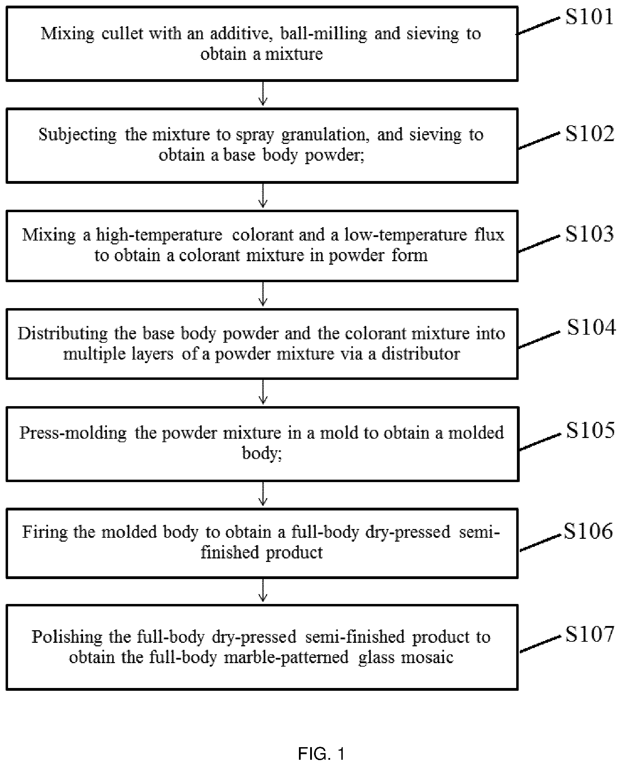

Figure 1 is a flow chart of the method for preparing the full-body marble-patterned glass mosaic of the present invention.

### DETAILED DESCRIPTION OF THE ILLUSTRATED EMBODIMENTS

To clearly illustrate the objectives, technical solutions and beneficial effects of the present invention, the present invention will be further described in detail with reference to the accompanying drawings.

As illustrated in Fig. 1, the invention provides a method for preparing the full-body marble-patterned glass mosaic, comprising the following steps:
S101: mixing cullet with an additive, ball-milling and sieving to obtain a mixture.

The cullet is prepared by ball-milling the scraps of a glass mosaic and broken glass; the cullet has a particle size of 106 µm - 840 µm (20-150 mesh), preferably 120 µm - 840 µm (20-120 mesh).

The cullet may be at least one selected from the group consisting of soda-lime-silica glass, quartz glass, high-silica glass, lead silicate glass, aluminosilicate glass, and borosilicate glass, but is not limited thereto. Preferably, the cullet is a mixture of soda-lime-silica glass, quartz glass, high-silica glass, lead silicate glass, aluminosilicate glass, and borosilicate glass. The cullet is generally a mixture of different kinds of glass. The present invention can employ a mixture of recycled glass, no raw glass powder is required. This allows 100% waste recycling and greatly reduces production costs. The cullet needs to be mixed with an additive for ball-milling. The additive comprises at least one selected from the group consisting of titanium dioxide, calcined kaolin, and a binder.

The binder is added in an amount of 0-1 wt% of the cullet. The binder binds the cullet together to form the product. Preferably, the binder is any one or a combination of methyl cellulose and a polyvinyl alcohol, but is not limited thereto.

To increase the whiteness of the glass mosaic and to truly recreate the pattern and texture of natural marble, titanium dioxide can be added at an amount of 1 wt% - 5 wt% of the cullet. Titanium dioxide not only increases the whiteness of the glass mosaic but also allows a more natural transition from the molten part to the non-molten part as a result of the melting reaction between titanium dioxide and the molten part of the cullet; the melting reaction also serves to bind the base body powder together. After firing, the overall color of the glass mosaic is more vivid and uniform, which contributes to the overall color stability of the glass mosaic. As a result, the glass mosaic has a better texture, gives a smoother touch, and is more visually appealing.

In the present application, the amount of titanium dioxide added is 1 wt% - 5 wt% of the cullet. Adding less than 5 wt% titanium dioxide gives a good result. However, if the amount is less than 1 wt%, the whiteness cannot be increased as desired. Furthermore, calcined kaolin is also introduced. Calcinated kaolin increases the fluidity of the powder particles after granulation. Preferably, the amount of the calcined kaolin is 1 wt% - 5 wt% of the cullet. If > 5 wt% calcinated kaolin is added, the firing temperature of the material will be too high, and it will be difficult for the material to be thoroughly fired. This affects the quality of the product. If only <1 wt% calcined kaolin is added, the fluidity is undesirable.

S102: subjecting the mixture to spray granulation, and sieving to obtain the base body powder.

After the cullet and the additive are added, the powder particles have poor fluidity, resulting in poor particle size uniformity. Therefore, spray granulation is performed in this embodiment to increase the fluidity, thereby achieving a uniform particle size. Preferably, the step of subjecting the mixture to spray granulation comprises:
spraying water into the mixture through a sprayer for uniform granulation, the water is 5 wt% - 30 wt% of a total amount of the mixture, then drying to a moisture content of 0.5-2%; sieving to obtain the base body powder. The particle size of the base body powder is ≥ 400 µm - 840 µm (≥20-40 mesh).

S103, mixing the high-temperature colorant and a low-temperature flux to obtain a colorant mixture in powder form.

The low-temperature flux is a glass powder with an expansion coefficient of (60-80)×10 ⁻⁷/°C and a particle size of > 840 µm (>20 mesh). Preferably, the glass powder has a melting temperature of 600-700°C, an expansion coefficient of (68-78)×10 ⁻⁷/°C, and a particle size of 25 µm - 38 µm (400-500 mesh). The melting temperature of the high-temperature colorant is 1000-1300°C.

Preferably, the glass powder is formed by pulverization of a soda-lime-silica ultra-clear float glass. More preferably, the glass powder comprises the following components: 60 wt% -74 wt% of SiO₂, 5 wt% - 15 wt% of Al₂O₃, 0-0.14 wt% of Fe₂O₃, 7.7 wt% - 11.7 wt% of CaO, 2.5 wt% - 4.0 wt% of MgO, 0.05 wt% - 15 wt% of Na₂O, 0.01 wt% - 13 wt% of K₂O, 0 - 0.3 wt% of SO₃, 0 -1 wt% of B₂O₃.

Compared with a regular glass powder, the glass powder of the present invention has a lower SiO₂ content and a higher Al₂O₃ content. Such a composition enhances the degree of connection in the glass network and significantly improves water resistance, alkali resistance and weathering resistance. In addition, 0-1 wt% of B₂O₃ is introduced, and the amount of Na₂O is reduced, enhancing the degree of polymerization of the network. As a result, the glass has a significantly reduced thermal expansion coefficient and significantly improved water resistance, alkali resistance and weathering resistance. Using the glass powder described above, the present invention has improved physical and chemical properties and a desirable chemical strengthening effect. Preferably, the ratio of (Al₂O₃+B₂O₃)/Na₂O is 1.09-1.15. Such a ratio optimizes the physical and chemical properties and chemical strengthening effect of the glass mosaic.

The glass powder described above as the low-temperature flux has a matching expansion coefficient with the other materials, reduces the peak exothermic temperature of the reaction, and controls the linear expansion coefficient and shrinkage of the reactants, thereby eliminating internal stress and preventing cracking in the final product. Moreover, the glass powder as the low-temperature flux ensures that the surface has excellent corrosion resistance, stain resistance, and good weathering resistance. Consequently, the formation of white particles on the surface of the mosaic as a result of long-time exposure to air/humidity can be prevented, foggy white spots or iridescence on the surface of the glass mosaic can be prevented.

The glass powder described above as the low-temperature flux increases transparency. Good transparency can still be achieved when the amount of the low-temperature flux is 95 wt% -100 wt% of the cullet. The full-body marble-patterned glass mosaic thus has a glassy texture. This, together with the process of distributing materials into multiple layers via the distributor, each layer comprising the first colorant and the second colorant, give rise to a pattern with a strong layering texture. The final product is able to vividly simulate the pattern and texture of natural marble.

The particle size of the cullet is 120 µm - 840 µm (20-120 mesh), and the particle size of the glass powder is 25 µm - 38 µm (400-500 mesh). Through the combination of different meshes of the glass powder and the cullet, delamination can be prevented during use. After material distribution, a natural marble pattern can be formed, which contributes to the glass texture of the final product. In addition, the glass powder increases the tensile strength, compressive strength, and wear resistance of the product.

The high-temperature colorant and the low-temperature flux are mixed thoroughly, wherein the amount of the high-temperature colorant is 0.1 wt% - 20 wt% of the cullet, and the amount of the low-temperature flux is 80 wt% - 100 wt% of the cullet. When the high-temperature colorant and the low-temperature flux area added in the amounts described above, they coordinate with the cullet and the additive: the high-temperature colorant and the low-temperature flux fully fuse and react with the molten part of the cullet, making the overall color of the glass mosaic more vivid and uniform, the marble pattern more natural. The texture and the performance of the glass mosaic are improved.

Preferably, to further improve the layering texture of the glass mosaic and to allow the glass mosaic to have a more well-defined structure, thereby more faithfully resembling the pattern and texture of natural marble, the amount of the high-temperature colorant is 0.1 - 5 wt% of the amount of the cullet; the amount of the low-temperature flux is 95 - 100 wt% of the amount of the cullet.

S104: distributing the base body powder and the colorant mixture into multiple layers of a powder mixture via a distributor.

S104 comprises:
Mixing the base body powder and the colorant mixture, the colorant mixture comprises a first colorant and a second colorant; distributing the base body powder and the colorant mixture into multiple layers of the powder mixture via the distributor, each layer comprises the first colorant and the second colorant.

The first colorant and the second colorant can be selected according to the desired pattern. For a full-body marble pattern, the first colorant and the second colorant are preferably cobalt black and praseodymium yellow, but are not limited thereto.

The distributor comprises a main material storage tank, a colorant storage tank, a conveyor, a distributing platform, a distributing apparatus, a press, a mold, a blank suction apparatus, a centering mechanism, and a lifting mechanism. The conveyor is connected to the main material storage tank; the distributing apparatus is provided on the distributing platform; the press and the blank suction apparatus are connected to the centering mechanism and the lifting mechanism to align and lift/lower the press and the blank suction apparatus.

The conveyor is connected to the main material storage tank to convey the base body powder. The main material storage tank is used to store the base body powder, and the colorant storage tank is used to store colorants. The distributing apparatus distributes the base body powder and the colorants according to a preset pattern, and press formation is then performed with the press and the mold. Finally, the blank formed is transferred with the blank suction apparatus.

S105: Press-molding the powder mixture in a mold to obtain a molded body.

S106: firing the molded body to obtain a full-body dry-pressed semi-finished product. Specifically, the firing temperature is preferably 820-860 °C, the firing time is preferably 60-100 min. More preferably, the firing temperature is 830-840 °C and the firing time is 70-80 min. A firing temperature that is too low is not conducive to increasing the strength of the mosaic, and the mosaic obtained this way may not have desirable shrinkage and water absorption. If the firing temperature is too high, the shrinkage of the product would be too large, and the product may have unsatisfactory strength.

It should be noted that it is also necessary to cool the glass mosaic preliminary product obtained after firing. The cooling treatment is a fast cooling treatment; specifically, the glass mosaic preliminary product can be cooled by a fast-cooling fan.

S107: Polishing the full-body dry-pressed semi-finished product to obtain the full-body marble-patterned glass mosaic.

Accordingly, the present invention also allows to prepare a full-body marble-patterned glass mosaic obtained by the preparation method described above. The full-body marble-patterned glass mosaic can be used as a decorative material. The decorative material may be a decorative brick with full-body marble-patterned glass mosaics attached to its surface or a decorative panel with full-body marble-patterned glass mosaics attached to its surface.

The invention is further illustrated by the following embodiments.

### Embodiment 1

### (1) Components:

The base body powder comprises 100 kg cullet, 0.1 kg binder, 1 kg titanium dioxide, and 1 kg calcined kaolin.

The colorant mixture comprises 0.1 kg of a high-temperature colorant and 95 kg of a glass powder.

The glass powder comprises the following components:
60 wt% -74 wt% of SiO₂, 5 wt% - 15 wt% of Al₂O₃, 0-0.14 wt% of Fe₂O₃, 7.7 wt% - 11.7 wt% of CaO, 2.5 wt% - 4.0 wt% of MgO, 0.05 wt% - 15 wt% of Na₂O, 0.01 wt% - 13 wt% of K₂O, 0 - 0.3 wt% of SO₃, 0 -1 wt% of B₂O₃.

### (2) Preparation method

Mixing 100 kg cullet with 0.1 kg binder, 1 kg titanium dioxide, and 1 kg calcined kaolin, ball-milling and sieving to obtain a mixture.

Subjecting the mixture to spray granulation by spraying 6 kg water into the mixture. Then, drying to a moisture content of 0.5%; and sieving to obtain a base body powder.

Mixing 0.1 kg of the high-temperature colorant and 95 kg of the glass powder thoroughly to obtain a colorant mixture in powder form.

Distributing the base body powder and the colorant mixture into multiple layers of a powder mixture via a distributor.

Press-molding the powder mixture in a mold to obtain a molded body.

Firing the molded body at 820°C for 60 min to obtain a full-body dry-pressed semi-finished product.

Polishing the full-body dry-pressed semi-finished product to obtain the full-body marble-patterned glass mosaic.

### Embodiment 2

### (1) Components:

The base body powder comprises 100 kg cullet, 0.5 kg binder, 2 kg titanium dioxide, and 2 kg calcined kaolin.

The colorant mixture comprises 1 kg of a high-temperature colorant and 97 kg of a glass powder.

The glass powder comprises the following components:
60 wt% -74 wt% of SiO₂, 5 wt% - 15 wt% of Al₂O₃, 0-0.14 wt% of Fe₂O₃, 7.7 wt% - 11.7 wt% of CaO, 2.5 wt% - 4.0 wt% of MgO, 0.05 wt% - 15 wt% of Na₂O, 0.01 wt% - 13 wt% of K₂O, 0 - 0.3 wt% of SO₃, 0 -1 wt% of B₂O₃.

### (2) Preparation method

Mixing 100 kg cullet with 0.5 kg binder, 2 kg titanium dioxide, and 2 kg calcined kaolin, ball-milling and sieving to obtain a mixture.

Subjecting the mixture to spray granulation by spraying 10 kg water into the mixture. Then, drying to a moisture content of 1%; and sieving to obtain a base body powder.

Mixing 1 kg of the high-temperature colorant and 97 kg of the glass powder thoroughly to obtain a colorant mixture in powder form.

Distributing the base body powder and the colorant mixture into multiple layers of a powder mixture via a distributor.

Press-molding the powder mixture in a mold to obtain a molded body.

Firing the molded body at 830°C for 70 min to obtain a full-body dry-pressed semi-finished product.

Polishing the full-body dry-pressed semi-finished product to obtain the full-body marble-patterned glass mosaic.

### Embodiment 3

### (1) Components:

The base body powder comprises 100 kg cullet, 0.8 kg binder, 3 kg titanium dioxide, and 2 kg calcined kaolin.

The colorant mixture comprises 3 kg of a high-temperature colorant and 97 kg of a glass powder.

The glass powder comprises the following components:
60 wt% -74 wt% of SiO₂, 5 wt% - 15 wt% of Al₂O₃, 0-0.14 wt% of Fe₂O₃, 7.7 wt% - 11.7 wt% of CaO, 2.5 wt% - 4.0 wt% of MgO, 0.05 wt% - 15 wt% of Na₂O, 0.01 wt% - 13 wt% of K₂O, 0 - 0.3 wt% of SO₃, 0 -1 wt% of B₂O₃.

### (2) Preparation method

Mixing 100 kg cullet with 0.8 kg binder, 3 kg titanium dioxide, and 2 kg calcined kaolin, ball-milling and sieving to obtain a mixture.

Subjecting the mixture to spray granulation by spraying 10 kg water into the mixture. Then, drying to a moisture content of 1.2%; and sieving to obtain a base body powder.

Mixing 3 kg of the high-temperature colorant and 97 kg of the glass powder thoroughly to obtain a colorant mixture in powder form.

Distributing the base body powder and the colorant mixture into multiple layers of a powder mixture via a distributor.

Press-molding the powder mixture in a mold to obtain a molded body.

Firing the molded body at 850°C for 75 min to obtain a full-body dry-pressed semi-finished product.

Polishing the full-body dry-pressed semi-finished product to obtain the full-body marble-patterned glass mosaic.

### Embodiment 4

### (1) Components:

The base body powder comprises 100 kg cullet, 1 kg binder, 5 kg titanium dioxide, and 5 kg calcined kaolin.

The colorant mixture comprises 10 kg of a high-temperature colorant and 100 kg of a glass powder.

The glass powder comprises the following components:
60 wt% -74 wt% of SiO₂, 5 wt% - 15 wt% of Al₂O₃, 0-0.14 wt% of Fe₂O₃, 7.7 wt% - 11.7 wt% of CaO, 2.5 wt% - 4.0 wt% of MgO, 0.05 wt% - 15 wt% of Na₂O, 0.01 wt% - 13 wt% of K₂O, 0 - 0.3 wt% of SO₃, 0 -1 wt% of B₂O₃.

### (2) Preparation method

Mixing 100 kg cullet with 1 kg binder, 5 kg titanium dioxide, and 5 kg calcined kaolin, ball-milling and sieving to obtain a mixture.

Subjecting the mixture to spray granulation by spraying 30 kg water into the mixture. Then, drying to a moisture content of 2%; and sieving to obtain a base body powder.

Mixing 10 kg of the high-temperature colorant and 100 kg of the glass powder thoroughly to obtain a colorant mixture in powder form.

Distributing the base body powder and the colorant mixture into multiple layers of a powder mixture via a distributor.

Press-molding the powder mixture in a mold to obtain a molded body.

Firing the molded body at 860°C for 100 min to obtain a full-body dry-pressed semi-finished product.

Polishing the full-body dry-pressed semi-finished product to obtain the full-body marble-patterned glass mosaic.

The full-body marble-patterned glass mosaics obtained from embodiments 1-4 of the present invention were tested according to ANSI A 137.2-2012, the results are as follows:
I. Testing the full-body marble-patterned glass mosaic of embodiment 1. The results are as below.
(1) Basic properties

| Tested Items | Methods | Requirements | Results |
|---|---|---|---|
| Coefficient of static friction | ASTM C1028-07el | Report results | Dry method: 0.67 |
| | | | Wet method: 0.43 |
| Water absorption | ASTM C373-17 | ≤ 0.5% | 0.06~0.09% |
| Breaking Strength/N | ASTM C648-04 | ≥ 600 | 1960 |
| Thermal shock resistance | 7.9 | Should pass this test | Sample not damaged after testing |
| (15±5) °C to (71±5) °C , 10 cycles | | | |
| Freezing resistance | ASTM C1026-13 | Should pass this test | Sample not broken, without cracks or other defects that cause degradation after 15 freeze-thaw cycles |
| (-3±0.25) °C to (16±11) °C , 150 cycles | | | |

(2) Corrosion resistance

| Tested items | Methods | Requirements | Results |
|---|---|---|---|
| Acetic acid solution, 3% (v/v) | ASTM C650-04 | Report results | No change |
| Acetic acid solution, 10% (v/v) | ASTM C650-04 | Report results | No change |
| Ammonium chloride solution, 100 g/L | ASTM C650-04 | Report results | No change |
| Citric acid solution, 30 g/L | ASTM C650-04 | Report results | No change |
| Citric acid solution, 100 g/L | ASTM C650-04 | Report results | No change |
| Lactic acid solution, 5% (v/v) | ASTM C650-04 | Report results | No change |
| Phosphoric acid solution, 3% (v/v) | ASTM C650-04 | Report results | No change |
| Phosphoric acid solution, 10% (v/v) | ASTM C650-04 | Report results | No change |
| Sulfamic acid solution, 30 g/L | ASTM C650-04 | Report results | No change |
| Sulfamic acid solution, 100 g/L | ASTM C650-04 | Report results | No change |
| Sodium hypochlorite solution, 20 mg/L | ASTM C650-04 | Report results | No change |
| Hydrochloric acid solution, 3% (v/v) | ASTM C650-04 | Report results | No change |
| Hydrochloric acid solution, 18% (v/v) | ASTM C650-04 | Report results | No change |
| Potassium hydroxide solution, 30 g/L | ASTM C650-04 | Report results | No change |
| Potassium hydroxide solution, 100 g/L | ASTM C650-04 | Report results | No change |
| Chemical resistance grade | 5.2.3.5 | Report results | GRADE C |

(3) Stain resistance

| Tested items | Methods | Requirements | Results |
|---|---|---|---|
| Reference mortar | ASTM C1378-04 | Report results | No change |
| Carbon ink | ASTM C1378-04 | Report results | No change |
| Waterproof ink (black) | ASTM C1378-04 | Report results | No change |
| Water-based ink | ASTM C1378-04 | Report results | No change |
| Potassium permanganate solution, 1% | ASTM C1378-04 | Report results | No change |
| Methyl blue solution, 1% | ASTM C1378-04 | Report results | No change |
| Stain resistance grade | 5.2.3.6 | Report results | Grade D |

II. Testing the full-body marble-patterned glass mosaic of embodiment 2. The results are as below.
(1) Basic properties

| Tested items | Methods | Requirements | Results |
|---|---|---|---|
| Coefficient of static friction | ASTM C1028-07el | Report results | Dry method: 0.65 |
| | | | Wet method: 0.41 |
| Water absorption | ASTM C373-17 | ≤ 0.5% | 0.05 - 0.08% |
| Breaking Strength/N | ASTM C648-04 | ≥ 600 | 1980 |
| Thermal shock resistance | 7.9 | Should pass this test | Sample not damaged after testing |
| (15±5) °C to (71±5)°C, 10 cycles | | | |
| Freezing resistance | ASTM C1026-13 | Should pass this test | Sample not broken, without cracks or other defects that cause degradation after 15 freeze-thaw cycles |
| (-3±0.25) °C to (16±11) °C , 150 cycles | | | |

(2) Corrosion resistance

| Tested items | Methods | Requirements | Results |
|---|---|---|---|
| Acetic acid solution, 3% (v/v) | ASTM C650-04 | Report results | No change |
| Acetic acid solution, 10% (v/v) | ASTM C650-04 | Report results | No change |
| Ammonium chloride solution, 100g/L | ASTM C650-04 | Report results | No change |
| Citric acid solution, 30g/L | ASTM C650-04 | Report results | No change |
| Citric acid solution, 100g/L | ASTM C650-04 | Report results | No change |
| Lactic acid solution, 5% (v/v) | ASTM C650-04 | Report results | No change |
| Phosphoric acid solution, 3% (v/v) | ASTM C650-04 | Report results | No change |
| Phosphoric acid solution, 10% (v/v) | ASTM C650-04 | Report results | No change |
| Sulfamic acid solution, 30 g/L | ASTM C650-04 | Report results | No change |
| Sulfamic acid solution, 100 g/L | ASTM C650-04 | Report results | No change |
| Sodium hypochlorite solution, 20 mg/L | ASTM C650-04 | Report results | No change |
| Hydrochloric acid solution, 3% (v/v) | ASTM C650-04 | Report results | No change |
| Hydrochloric acid solution, 18% (v/v) | ASTM C650-04 | Report results | No change |
| Potassium hydroxide solution, 30 g/L | ASTM C650-04 | Report results | No change |
| Potassium hydroxide solution, 100 g/L | ASTM C650-04 | Report results | No change |
| Chemical resistance grade | 5.2.3.5 | Report results | Grade C |

(3) Stain resistance

| Tested items | Methods | Requirements | Results |
|---|---|---|---|
| Reference mortar | ASTM C1378-04 | Report results | No change |
| Carbon ink | ASTM C1378-04 | Report results | No change |
| Waterproof ink (black) | ASTM C1378-04 | Report results | No change |
| Water-based ink | ASTM C1378-04 | Report results | No change |
| Potassium permanganate solution, 1% | ASTM C1378-04 | Report results | No change |
| Methyl blue solution, 1% | ASTM C1378-04 | Report results | No change |
| Stain resistance grade | 5.2.3.6 | Report results | Grade D |

III. Testing the full-body marble-patterned glass mosaic of embodiment 3. The results are as below.
(1) Basic properties

| Tested items | Methods | Requirements | Results |
|---|---|---|---|
| Coefficient of static friction | ASTM C1028-07el | Report results | Dry method: 0.68 |
| | | | Wet method: 0.42 |
| Water absorption | ASTM C373-17 | ≤ 0.5% | 0.07 - 0.09% |
| Breaking Strength/N | ASTM C648-04 | ≥ 600 | 1890 |
| Thermal shock resistance | 7.9 | Should pass this test | Sample not damaged after testing |
| (15±5)°C to (71±5)°C, 10 cycles | | | |
| Freezing resistance | ASTM C1026-13 | Should pass this test | Sample not broken, without cracks or other defects that cause degradation after 15 freeze-thaw cycles |
| (-3±0.25)°C to (16±11)°C, 150 cycles | | | |

(2) Corrosion resistance

| Tested items | Methods | Requirements | Results |
|---|---|---|---|
| Acetic acid solution, 3% (v/v) | ASTM C650-04 | Report results | No change |
| Acetic acid solution, 10% (v/v) | ASTM C650-04 | Report results | No change |
| Ammonium chloride solution, 100g/L | ASTM C650-04 | Report results | No change |
| Citric acid solution, 30g/L | ASTM C650-04 | Report results | No change |
| Citric acid solution, 100g/L | ASTM C650-04 | Report results | No change |
| Lactic acid solution, 5% (v/v) | ASTM C650-04 | Report results | No change |
| Phosphoric acid solution, 3% (v/v) | ASTM C650-04 | Report results | No change |
| Phosphoric acid solution, 10% (v/v) | ASTM C650-04 | Report results | No change |
| Sulfamic acid solution, 30 g/L | ASTM C650-04 | Report results | No change |
| Sulfamic acid solution, 100 g/L | ASTM C650-04 | Report results | No change |
| Sodium hypochlorite solution, 20 mg/L | ASTM C650-04 | Report results | No change |
| Hydrochloric acid solution, 3% (v/v) | ASTM C650-04 | Report results | No change |
| Hydrochloric acid solution, 18% (v/v) | ASTM C650-04 | Report results | No change |
| Potassium hydroxide solution, 30 g/L | ASTM C650-04 | Report results | No change |
| Potassium hydroxide solution, 100 g/L | ASTM C650-04 | Report results | No change |
| Chemical resistance grade | 5.2.3.5 | Report results | Grade C |

(3) Stain resistance

| Tested items | Methods | Requirements | Results |
|---|---|---|---|
| Reference mortar | ASTM C1378-04 | Report results | No change |
| Carbon ink | ASTM C1378-04 | Report results | No change |
| Waterproof ink (black) | ASTM C1378-04 | Report results | No change |
| Water-based ink | ASTM C1378-04 | Report results | No change |
| Potassium permanganate solution, 1% | ASTM C1378-04 | Report results | No change |
| Methyl blue solution, 1% | ASTM C1378-04 | Report results | No change |
| Stain resistance grade | 5.2.3.6 | Report results | Grade D |

IV. Testing the full-body marble-patterned glass mosaic of embodiment 4. The results are as below.
(1) Basic properties

| Tested items | Methods | Requirements | Results |
|---|---|---|---|
| Coefficient of static friction | ASTM C1028-07el | Report results | Dry method: 0.66 |
| | | | Wet method: 0.45 |
| Water absorption | ASTM C373-17 | ≤ 0.5% | 0.07 - 0.10% |
| Breaking Strength/N | ASTM C648-04 | ≥ 600 | 1980 |
| Thermal shock resistance (15±5)°C to (71±5) °C, 10 cycles | 7.9 | Should pass this test | Sample not damaged after testing |
| Freezing resistance (-3±0.25) °C to (16±11)°C, 150 cycles | ASTM C1026-13 | Should pass this test | Sample not broken, without cracks or other defects that cause degradation after 15 freeze-thaw cycles |

(2) Corrosion resistance

| Tested items | Methods | Requirements | Results |
|---|---|---|---|
| Acetic acid solution, 3% (v/v) | ASTM C650-04 | Report results | No change |
| Acetic acid solution, 10% (v/v) | ASTM C650-04 | Report results | No change |
| Ammonium chloride solution, 100 g/L | ASTM C650-04 | Report results | No change |
| Citric acid solution, 30 g/L | ASTM C650-04 | Report results | No change |
| Citric acid solution, 100 g/L | ASTM C650-04 | Report results | No change |
| Lactic acid solution, 5% (v/v) | ASTM C650-04 | Report results | No change |
| Phosphoric acid solution, 3% (v/v) | ASTM C650-04 | Report results | No change |
| Phosphoric acid solution, 10% (v/v) | ASTM C650-04 | Report results | No change |
| Sulfamic acid solution, 30 g/L | ASTM C650-04 | Report results | No change |
| Sulfamic acid solution, 100 g/L | ASTM C650-04 | Report results | No change |
| Sodium hypochlorite solution, 20 mg/L | ASTM C650-04 | Report results | No change |
| Hydrochloric acid solution, 3% (v/v) | ASTM C650-04 | Report results | No change |
| Hydrochloric acid solution, 18% (v/v) | ASTM C650-04 | Report results | No change |
| Potassium hydroxide solution, 30 g/L | ASTM C650-04 | Report results | No change |
| Potassium hydroxide solution, 100 g/L | ASTM C650-04 | Report results | No change |
| Chemical resistance grade | 5.2.3.5 | Report results | Grade C |

(3) Stain resistance

| Tested items | Methods | Requirements | Results |
|---|---|---|---|
| Reference mortar | ASTM C1378-04 | Report results | No change |
| Carbon ink | ASTM C1378-04 | Report results | No change |
| Waterproof ink (black) | ASTM C1378-04 | Report results | No change |
| Water-based ink | ASTM C1378-04 | Report results | No change |
| Potassium permanganate solution, 1% | ASTM C1378-04 | Report results | No change |
| Methyl blue solution, 1% | ASTM C1378-04 | Report results | No change |
| Stain resistance grade | 5.2.3.6 | Report results | Grade D |

In summary, the full-body marbled glass mosaic obtained with the method of the present invention has outstanding properties, low water absorption, high breaking strength, good thermal shock resistance and freezing resistance, and excellent corrosion resistance and stain resistance. Moreover, the glass mosaic has a glassy texture and a strong layering pattern, which vividly simulates the pattern and texture of natural marble.

## Claims

1. A method for preparing a full-body marble-patterned glass mosaic, wherein it comprises the following:
S101: mixing cullet with an additive, ball-milling and sieving to obtain a mixture, the cullet has a particle size of 106 µm - 840 µm (20-150 mesh);
S102: subjecting the mixture to spray granulation, and sieving to obtain a base body powder;
S103: mixing a high-temperature colorant and a low-temperature flux to obtain a colorant mixture in powder form; an amount of the high-temperature colorant is 0.1 - 20 wt% of an amount of the cullet, an amount of the low-temperature flux is 80 - 100 wt% of the amount of the cullet; the low-temperature flux is a glass powder with an expansion coefficient of (60-80)×10⁻⁷/°C and a particle size of >840 µm (>20 mesh);
S104: distributing the base body powder and the colorant mixture into multiple layers of a powder mixture via a distributor;
S105: press-molding the powder mixture in a mold to obtain a molded body;
S106: firing the molded body to obtain a full-body dry-pressed semi-finished product; and
S107: polishing the full-body dry-pressed semi-finished product to obtain the full-body marble-patterned glass mosaic.

2. The method according to claim 1, wherein the glass powder has a melting temperature of 600-700°C, an expansion coefficient of (68-78)×10 ⁻⁷/°C and a particle size of 25 µm - 38 µm (400-500 mesh).

3. The method according to claim 1, wherein the glass powder is formed by pulverization of a soda-lime-silica ultra-clear float glass.

4. The method according to claim 1, wherein the glass powder comprises 60 wt% -74 wt% of SiO₂, 5 wt% - 15 wt% of Al₂O₃, 0-0.14 wt% of Fe₂O₃, 7.7 wt% - 11.7 wt% of CaO, 2.5 wt% - 4.0 wt% of MgO, 0.05 wt% - 15 wt% of Na₂O, 0.01 wt% - 13 wt% of K₂O, 0 - 0.3 wt% of SO₃, 0 -1 wt% of B₂O₃.

5. The method according to claim 1, wherein the additive comprises at least one selected from the group consisting of titanium dioxide, calcined kaolin, and a binder;
wherein an amount of the additive added is 0 - 1 wt% of the amount of the cullet; the binder is at least one selected from the group consisting of methyl cellulose and a polyvinyl alcohol;
wherein an amount of the titanium dioxide is 1 wt% - 5 wt% of the amount of the cullet;
wherein an amount of the calcined kaolin is 1 wt% - 5 wt% of the amount of the cullet.

6. The method according to claim 1, wherein the amount of the high-temperature colorant is 0.1 - 5 wt% of the amount of the cullet; the amount of the low-temperature flux is 95 - 100 wt% of the amount of the cullet.

7. The method according to claim 1, wherein S102 comprises
spraying water into the mixture through a sprayer for uniform granulation, then drying to a moisture content of 0.5-2%; sieving to obtain the base body powder;
wherein the water is 5 wt% - 30 wt% of a total amount of the mixture.

8. The method according to claim 1, wherein S104 comprises
mixing the base body powder and the colorant mixture, the colorant mixture comprises a first colorant and a second colorant;
distributing the base body powder and the colorant mixture into multiple layers of the powder mixture via the distributor, each layer comprises the first colorant and the second colorant.

9. The method according to claim 1, wherein the cullet is prepared by ball-milling scraps of a glass mosaic and broken glass; the cullet has a particle size of 120 µm - 840 µm (20-120 mesh).

## Patentansprüche

1. Verfahren zur Herstellung eines Vollkörperglasmosaiks mit Marmormuster, wobei es das Folgende umfasst:
S101: Mischen von Bruchglas mit einem Zusatzstoff, Kugelmahlen und Sieben, um eine Mischung zu erhalten, wobei das Bruchglas eine Partikelgröße von 106 µm bis 840 µm (20 bis 150 mesh) aufweist;
S102: Unterziehen der Mischung gegenüber einer Sprühgranulierung und Sieben, um ein Grundkörperpulver zu erhalten;
S103: Mischen eines Hochtemperaturfarbstoffs und eines Niedrigtemperaturflussmittels, um eine Farbstoffmischung in Pulverform zu erhalten; wobei eine Menge des Hochtemperaturfarbstoffs 0,1 bis 20 Gew.-% einer Menge des Bruchglases beträgt, eine Menge des Niedrigtemperaturflussmittels 80 bis 100 Gew.-% der Menge des Bruchglases beträgt; das Niedrigtemperaturflussmittel ein Glaspulver mit einem Ausdehnungskoeffizienten von (60-80)×10⁻⁷/°C und einer Partikelgröße von 840 µm (>20 mesh) ist;
S104: Verteilen des Grundkörperpulvers und der Farbstoffmischung in mehrere Schichten einer Pulvermischung mittels einer Verteilvorrichtung;
S105: Pressformen der Pulvermischung in einer Form, um einen Formkörper zu erhalten;
S106: Brennen des Formkörpers, um ein trockengepresstes Vollkörperhalbfertigprodukt zu erhalten; und
S107: Polieren des trockengepressten Vollkörperhalbfertigprodukts, um das Vollkörperglasmosaik mit Marmormuster zu erhalten.

2. Verfahren nach Anspruch 1, wobei das Glaspulver eine Schmelztemperatur von 600 bis 700 °C, einen Ausdehnungskoeffizienten von (68-78)×10⁻⁷/°C und eine Partikelgröße von 25 µm bis 38 µm (400 bis 500 mesh) aufweist.

3. Verfahren nach Anspruch 1, wobei das Glaspulver durch Pulverisierung eines ultraklaren Natron-Kalk-Siliziumdioxid-Floatglases gebildet wird.

4. Verfahren nach Anspruch 1, wobei das Glaspulver 60 Gew.-% bis 74 Gew.-% SiO₂, 5 Gew.-% bis 15 Gew.-% Al₂O₃, 0 bis 0,14 Gew.-% Fe₂O₃, 7,7 Gew.-% bis 11,7 Gew.-% CaO, 2,5 Gew.-% bis 4,0 Gew.-% MgO, 0,05 Gew.-% bis 15 Gew.-% Na₂O, 0,01 Gew.-% bis 13 Gew.-% K₂O, 0 bis 0,3 Gew.-% SO₃, 0 bis 1 Gew.-% B₂O₃ enthält.

5. Verfahren nach Anspruch 1, wobei der Zusatzstoff mindestens eines umfasst, das ausgewählt ist aus der Gruppe bestehend aus Titandioxid, kalziniertem Kaolin und einem Bindemittel;
wobei eine Menge des hinzugefügten Zusatzstoffs 0 bis 1 Gew.-% der Menge des Bruchglases beträgt; das Bindemittel mindestens eines ist, das ausgewählt ist aus der Gruppe, bestehend aus Methylcellulose und einem Polyvinylalkohol;
wobei eine Menge des Titandioxids 1 bis 5 Gew.-% der Menge des Bruchglases beträgt;
wobei eine Menge des kalzinierten Kaolins 1 Gew.-% bis 5 Gew.-% der Menge des Bruchglases beträgt.

6. Verfahren nach Anspruch 1, wobei die Menge des Hochtemperaturfarbmittels 0,1 bis 5 Gew.-% der Menge des Bruchglases beträgt; die Menge des Niedertemperaturflussmittels 95 bis 100 Gew.-% der Menge des Bruchglases beträgt.

7. Verfahren nach Anspruch 1, wobei S102 das Sprühen von Wasser in das Gemisch durch eine Sprühvorrichtung zur gleichmäßigen Granulierung, das anschließende Trocknen auf einen Feuchtigkeitsgehalt von 0,5 bis 2 %; und Sieben umfasst, um das Grundkörperpulver zu erhalten;
wobei das Wasser 5 Gew.-% bis 30 Gew.-% der Gesamtmenge der Mischung beträgt.

8. Verfahren nach Anspruch 1, wobei S104 umfasst
Mischen des Grundkörperpulvers und der Farbstoffmischung, wobei die Farbstoffmischung einen ersten Farbstoff und einen zweiten Farbstoff enthält;
Verteilen des Grundkörperpulvers und der Farbstoffmischung in mehrere Schichten der Pulvermischung mittels der Verteilvorrichtung, wobei jede Schicht den ersten Farbstoff und den zweiten Farbstoff enthält.

9. Verfahren nach Anspruch 1, wobei das Bruchglas durch Kugelmahlen von Stücken eines Glasmosaiks und von Glasbruch hergestellt wird; das Bruchglas eine Partikelgröße von 120 µm bis 840 µm (20 bis 120 mesh) aufweist.

## Revendications

1. Procédé de préparation d'une mosaïque en verre à motif marbré pleine masse, dans lequel il comprend ce qui suit :
S101 : le mélange de calcin avec un additif, le broyage à boulets et le tamisage pour obtenir un mélange, le calcin a une granulométrie de 106 µm à 840 µm (20 à 150 mesh) ;
S102: la soumission du mélange à une granulation par pulvérisation et le tamisage pour obtenir une poudre de corps de base ;
S103: le mélange d'un colorant à haute température et d'un flux à basse température pour obtenir un mélange de colorants sous forme de poudre ; une quantité du colorant à haute température représente de 0,1 à 20 % en poids d'une quantité du calcin, une quantité du flux à basse température représente de 80 à 100 % en poids de la quantité du calcin ; le flux à basse température est une poudre de verre ayant un coefficient de dilatation de (60-80)×10⁻⁷/°C et une granulométrie > 840 µm (> 20 mesh) ;
S104 : la distribution de la poudre de corps de base et du mélange de colorants en plusieurs couches d'un mélange de poudres par l'intermédiaire d'un distributeur ;
S105 : le moulage par pression du mélange de poudres dans un moule pour obtenir un corps moulé ;
S106 : la cuisson du corps moulé pour obtenir un produit semi-fini pressé à sec pleine masse ; et
S107 : le polissage du produit semi-fini pressé à sec pleine masse pour obtenir la mosaïque en verre à motif marbré pleine masse.

2. Procédé selon la revendication 1, dans lequel la poudre de verre a une température de fusion de 600 à 700 °C, un coefficient de dilatation de (68 à 78)×10⁻⁷/°C et une granulométrie de 25 µm à 38 µm (400 à 500 mesh).

3. Procédé selon la revendication 1, dans lequel la poudre de verre est formée par pulvérisation d'un verre flotté ultra-transparent de soude-chaux-silice.

4. Procédé selon la revendication 1, dans lequel la poudre de verre comprend de 60 % en poids à 74 % en poids de SiO₂, de 5 % en poids à 15 % en poids d'Al₂O₃, de 0 à 0,14 % en poids de Fe₂O₃, de 7,7 % en poids à 11,7 % en poids de CaO, de 2,5 % en poids à 4,0 % en poids de MgO, de 0,05 % en poids à 15 % en poids de Na₂O, de 0,01 % en poids à 13 % en poids de K₂O, de 0 à 0,3 % en poids de SO₃, de 0 à 1 % en poids de B₂O₃.

5. Procédé selon la revendication 1, dans lequel l'additif comprend au moins un additif choisi dans le groupe constitué par le dioxyde de titane, le kaolin calciné et un liant ;
dans lequel une quantité de l'additif ajouté représente de 0 à 1 % en poids de la quantité du calcin ; le liant est au moins un liant choisi dans le groupe constitué par la méthylcellulose et un alcool polyvinylique ;
dans lequel une quantité du dioxyde de titane représente de 1 % en poids à 5 % en poids de la quantité du calcin ;
dans lequel une quantité du kaolin calciné représente de 1 % en poids à 5 % en poids de la quantité du calcin.

6. Procédé selon la revendication 1, dans lequel la quantité du colorant à haute température représente de 0,1 à 5 % en poids de la quantité du calcin ; la quantité du flux à basse température représente 95 à 100 % en poids de la quantité du calcin.

7. Procédé selon la revendication 1, dans lequel S102 comprend
la pulvérisation d'eau dans le mélange à travers un pulvérisateur pour une granulation uniforme, puis le séchage jusqu'à une teneur en humidité de 0,5 à 2 % ; le tamisage pour obtenir la poudre de corps de base ;
dans lequel l'eau représente de 5 % en poids à 30 % en poids de la quantité totale du mélange.

8. Procédé selon la revendication 1, dans lequel S104 comprend
le mélange de la poudre de corps de base et du mélange de colorants, le mélange de colorants comprend un premier colorant et un second colorant ;
la distribution de la poudre de corps de base et du mélange de colorants en de multiples couches du mélange de poudres par l'intermédiaire du distributeur, chaque couche comprend le premier colorant et le second colorant.

9. Procédé selon la revendication 1, dans lequel le calcin est préparé par broyage à boulets de déchets de mosaïque en verre et de bris de verre ; le calcin a une granulométrie de 120 µm à 840 µm (20 à 120 mesh).
